# EUROPÄISCHE PATENTSCHRIFT

(11) **EP 0 387 643 B1**
(45) Veröffentlichungstag und Bekanntmachung des Hinweises auf die Patenterteilung: **09.11.1994**
(21) Anmeldenummer: 90104145.9
(22) Anmeldetag: 03.03.1990
(51) Int. Cl.: H01M 8/24

(54) **Brennstoffzellenanordnung**
Fuel cell assembly
Assemblage de piles à combustible

(30) Priorität: 08.03.1989 DE 3907485
(43) Veröffentlichungstag der Anmeldung: 19.09.1990
(73) Patentinhaber: Asea Brown Boveri Aktiengesellschaft, 68309 Mannheim (DE)
(72) Erfinder: Rohr, Franz-Josef, Dr., D-6941 Abtsteinach (DE)
(74) Vertreter: Rupprecht, Klaus, Dipl.-Ing.

(56) Entgegenhaltungen:
- EP-A- 0 180 289
- EP-A- 0 194 374
- EP-A- 0 285 727
- DE-A- 1 922 970
- FR-A- 2 182 650
- FR-A- 2 347 783
- US-A- 3 525 646
- PATENT ABSTRACTS OF JAPAN, Band 5, Nr. 153 (E-76)[825], 26. September 1981;& JP-A-56 84 882 (MATSUSHITA DENKI SANGYO K.K.) 10-07-1981
- PATENT ABSTRACTS OF JAPAN, Band 12, Nr. 397 (E-672)[3244], 21. Oktober 1988;& JP-A-63 138 667 (MITSUBISHI HEAVY IND. LTD) 10-06-1988
- JOURNAL OF POWER SOURCES, Band 10, Nr. 1, Juni 1983, Seiten 89-102, ElsevierSequoia, Amsterdam, NL; W. FEDUSKA et al.: "High-temperature solid oxide fuelcell-technical status"
- PATENT ABSTRACTS OF JAPAN, Band 14, Nr. 70 (E-886)[4013], 8. Februar 1990;& JP-A-1 289 070 (MITSUBISHI HEAVY IND.) 21-11-1989
- PATENT ABSTRACTS OF JAPAN, Band 14, Nr. 120 (E-899)[4063], 6. März 1990;
- & JP-A-1 315 960 (MITSUBISHI HEAVY IND.) 20-12-1989

## Beschreibung

Die Erfindung bezieht sich auf eine Brennstoffzellenanordnung mit einem als poröse Platte ausgebildeten Träger, auf dem Brennstoffzellen angeordnet sind, gemäß dem Oberbegriff des Patentanspruches 1.

Eine solche Brennstoffzellenanordnung kann als elektrische Stromquelle genutzt werden. Aus der Informationsschrift "High Temperature Fuel Cells, Solid Electrolytes", 1978, F. J. Rohr, ist eine keramische Brennstoffzelle mit einem sauerstoffionenleitenden Festelektrolyten sowie einer Anode und einer Kathode bekannt. Diese Einrichtung ermöglicht es, bei Temperaturen von mehr als 800°C die chemische Energie eines Brennstoffs in Form von Kohle, Erdöl, Erdgas oder Wasserstoff durch elektrochemische Oxidation mit Sauerstoff direkt in elektrische Energie umzuwandeln. Diese Energieumwandlung erfolgt mit einem Wirkungsgrad, der größer ist als 50%. Die Energieumwandlung geschieht weitgehend schadstoffrei. Diese bekannte Einrichtung wird durch ein keramisches Trägerrohr gebildet. Auf der Oberfläche des Trägerrohrs sind dünne Schichten übereinander aufgetragen, die als Kathode, Festelektrolyt und Anode dienen. Ferner weist der Träger gasdichte dünne Streifen auf, die als elektrisch leitende Verbindungselemente für die Serienschaltung dieser Brennstoffzellen vorgesehen sind. Beim Betrieb dieser Brennstoffzelle, deren Arbeitstemperatur bei 800° bis 1000°C liegt, wird durch das Innere des rohrförmigen Trägers Luft geleitet. Der gasförmige bzw. vergaste Brennstoff wird an der ganz außen liegenden Elektrode vorbeigeleitet. Die bekannte Brennstoffzelle erzeugt eine Leerlaufspannung von etwa 1 Volt. Zur Erzielung einer höheren Spannung werden deshalb mehrere Brennstoffzellen über die oben beschriebenen elektrisch leitenden Verbindungselemente miteinander verschaltet. Für den Aufbau größerer Anlagen mit einer elektrischen Leistung von beispielsweise 25 kW, 100 kW oder 1 MW muß deshalb zunächst eine große Anzahl von Brennstoffzellen hergestellt werden. Diese werden dann über eine Vielzahl von elektrisch leitenden Verbindungselementen aus Nickelfilz in Serie oder parallel geschaltet. Die verwendeten Nickelfilze weisen den Nachteil auf, daß sie bei 800° bis 1000°C im Langzeitbetrieb schrumpfen und eine Minderung des elektrischen Kontakts zwischen den Brennstoffzellen und somit einen ohmschen Spannungsverlust bewirken.

Aus der FR-A-2 347 783 ist ebenfalls eine Brennstoffzellenanordnung bekannt, die aus zwei Teilstücken zusammengesetzt ist. Jedes Teilstück wird durch einen porösen Träger gebildet, der mit Rinnen versehen ist, deren Längsachsen in definiertem Abstand voneinander parallel verlaufen. Auf die Innenfläche einer jeden Rinne ist eine als Kathode dienende Elektrode aufgetragen. An diese Elektrode schließt unmittelbar ein Festelektrolyt an, auf den eine als Anode dienende Elektrode aufgetragen ist. Zur Ausbildung der Brennstoffzellenanordnung werden zwei dieser Teilstücke mit ihren Rinnen gegeneinander gesetzt, so daß diese zylinderförmige Hohlräume bilden. Durch die Hohlräume wird Sauerstoff geleitet, während der Oberfläche des Trägers der Brennstoff zugeführt wird. Eine Umkehr der Zufuhr von Sauerstoff und Brennstoff ist ebenfalls möglich.

In der DE-A-19 22 970 ist eine Brennstoffzellenbatterie beschrieben. Bei einer Ausführungsform ist ein zylinder- oder quaderförmiger Träger vorgesehen, der im Inneren einen durchgehenden Hohlraum aufweist. Auf den Außenflächen des Trägers sind eine Vielzahl von Brennstoffzellen angeordnet.

Der Erfindung liegt die Aufgabe zugrunde, eine Brennstoffzellenanordnung zu schaffen, bei der die Anzahl der Brennstoffzellen je nach Bedarf frei wählbar und eine serielle und parallele Verschaltung der Brennstoffzellen auf einfache Weise möglich ist.

Diese Aufgabe wird erfindungsgemäß durch die Merkmale des Patentanspruches 1 gelöst.

Die als Träger verwendete Platte ist aus einem porösen keramischen Material gefertigt, das bei 1000°C einen thermischen Ausdehnungskoeffizienten von 10 bis 11 x 10⁻⁶ Grad⁻¹ aufweist. Die Porosität des Trägers beträgt 35% bis 45% bezogen auf die theoretische Dichte des für seine Herstellung verwendeten Werkstoffs. Vorzugsweise wird zur Fertigung der Platte stabilisierendes Zirkoniumoxid oder ein Magnesium-Aluminiumspinell verwendet. Jede Platte ist im Inneren mit mindestens einem Hohlraum versehen, der nach außenhin geöffnet ist. Vorzugsweise weist jede Platte mehrere solcher Hohlräume auf, die sich zwischen zwei parallel zueinander verlaufenden Seitenkanten der Platte erstrecken, in definiertem Abstand voneinander angeordnet und gegeneinander abgegrenzt sind. Erfindungsgemäß besteht die Möglichkeit, in die Trennwände der Hohlräume Kühleinrichtungen zu integrieren. Die Trennwände der Hohlräume können beispielsweise auch direkt als Plattenkühler ausgebildet werden, so daß ein Wärmeaustausch zwischen einströmender kalter Luft und auströmender heißer Luft stattfinden kann. Auf den Oberflächen der Platte sind mehrere Brennstoffzellen angeordnet. Erfindungsgemäß sind die porösen Kathoden der Brennstoffzellen im Bereich der Hohlräume unmittelbar auf die Oberfläche der Platte aufgetragen. Die Abmessungen der Kathoden sind an die Länge und Breite der Hohlräume angepaßt. Die Kathode und die Anode zweier benachbarter Brennstoffzellen sind über eine elektrisch leitende Schicht miteinander verbunden, die aus einem gasdichten Material gefertigt und ebenfalls unmittelbar auf die Oberfläche der Platte aufgetragen ist. Die Dicke der elektrisch leitenden Schicht beträgt etwa 50 µm. Die Schicht wird vorzugsweise aus La₁₋ₓ(Sr)ₓCrO₃ oder LaMgₓCr₁₋ₓO₃ gefertigt. Zwischen der Anode und der Kathode eines jeden Brennstoffzellenelements ist ein Festelektrolyt in Form einer Schicht angeordnet. Diese ist auf die Kathode aufgetragen und überzieht diese flächendeckend. Auf der Oberfläche des Festelektrolyten ist die Anode bereichsweise angeordnet. Die den Festelektrolyten bildende Schicht 12 ist etwa 50 bis 100 µm dick und aus (ZrO₂)_{0,92}(Y₂O₃)_{0,08} gebildet. Sie ist mit einem ersten Randbereich auf die Platte aufgetragen, während der zweite Randbereich der Schicht auf der elektrisch leitenden Schicht angeordnet ist, welche die Brennstoffzelle, zu der der Festelektrolyt gehört, mit der benachbarten Brennstoffzelle verbindet. Die poröse Anode einer jeden Brennstoffzelle wird durch eine Schicht aus Ni-ZrO₂-Cermet gebildet. Die Schicht weist eine Dicke zwischen 50 bis 100 µm auf und ist im wesentlichen auf die Oberfläche des Festelektrolyten aufgetragen. Ein Randbereich der Anode ist auf die elektrisch leitende Schicht aufgetragen, welche die Brennstoffzelle zu der die Anode gehört, mit der zweiten benachbarten Brennstoffzelle verbindet. Die als Träger für die Brennstoffzellen dienenden Platten werden mit einer Dicke von 5 bis 10 mm ausgebildet. Die Begrenzungswände der Platten weisen eine Dicke zwischen 1 und 2 mm auf. Die Plattenoberfläche kann 100 bis 10000 cm² betragen. Die Hohlräume, welche die Platte durchziehen, weisen eine Länge zwischen 10 und 100 cm auf und sind etwa 5 bis 20 mm breit. Erfindungsgemäß können mehrere mit Brennstoffzellen versehene Platten zu einem Modul zusammengefaßt werden. Eine hierfür vorgesehene Haltevorrichtung ist mit Vertiefungen ausgestattet, in welche die Platten eingesetzt werden können. Die Breite der Vertiefungen ist an die Breite der Platten angepaßt. Die Platten werden auf der Haltevorrichtung so angeordnet, daß ihre Oberflächen senkrecht zu deren Oberfläche angeordnet sind. Die Unterseite der Haltevorrichtung weist eine Zuleitung für Luft auf. Im Inneren der Haltevorrichtung befindet sich eine Verteilerkammer, in welche die Luft einströmen kann. Die Vertiefungen zur Aufnahme der Platten sind zur Verteilerkammer hin geöffnet. Die Platten mit den Brennstoffzellen werden so in die Vertiefungen eingesetzt, daß die Hohlräume mit ihren Öffnungen der Verteilerkammer zugewandt sind. Hierdurch ist es möglich, daß die in die Verteilerkammer einströmende Luft durch die Hohlräume der Platten strömen kann.

Weitere erfindungswesentliche Merkmale der Erfindung sind in den Unteransprüchen gekennzeichnet. Die Erfindung wird nachfolgend anhand von schematischen Zeichnungen erläutert.

Es zeigen:
- Figur 1:: Eine Platte mit mehreren Brennstoffzellen,
- Figur 2:: die Beschichtungsschritte zur Ausbildung von Brennstoffzellen auf einer Platte,
- Figur 3:: eine Variante der in Figur 1 gezeigten Platte,
- Figur 4:: eine weitere Ausführungsform der Platte,
- Figur 5:: eine vierte Variante der Platte,
- Figur 6:: ein Modul mit mehreren Brennstoffzellenanordnungen.

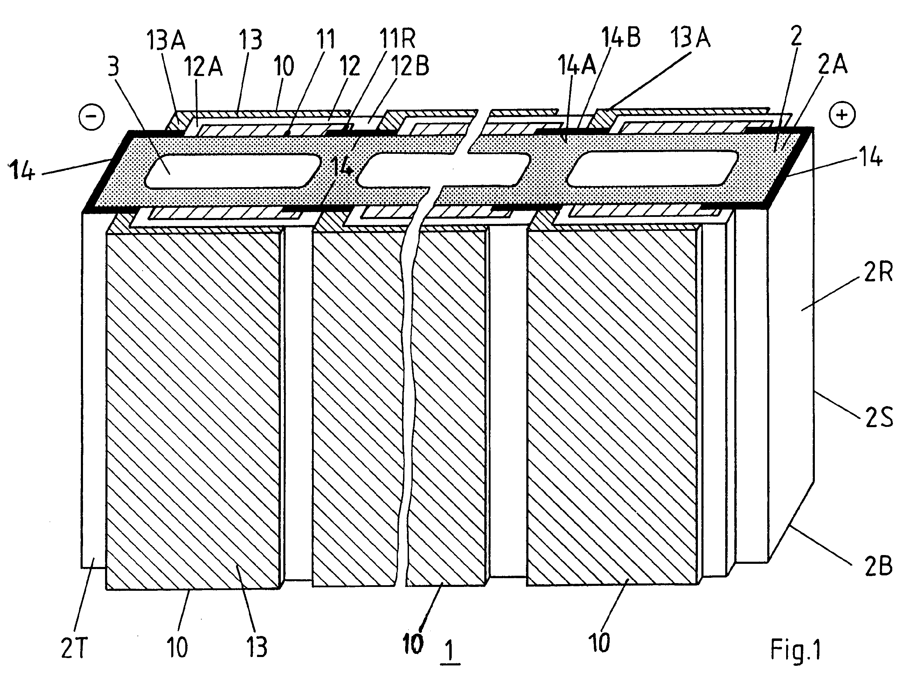

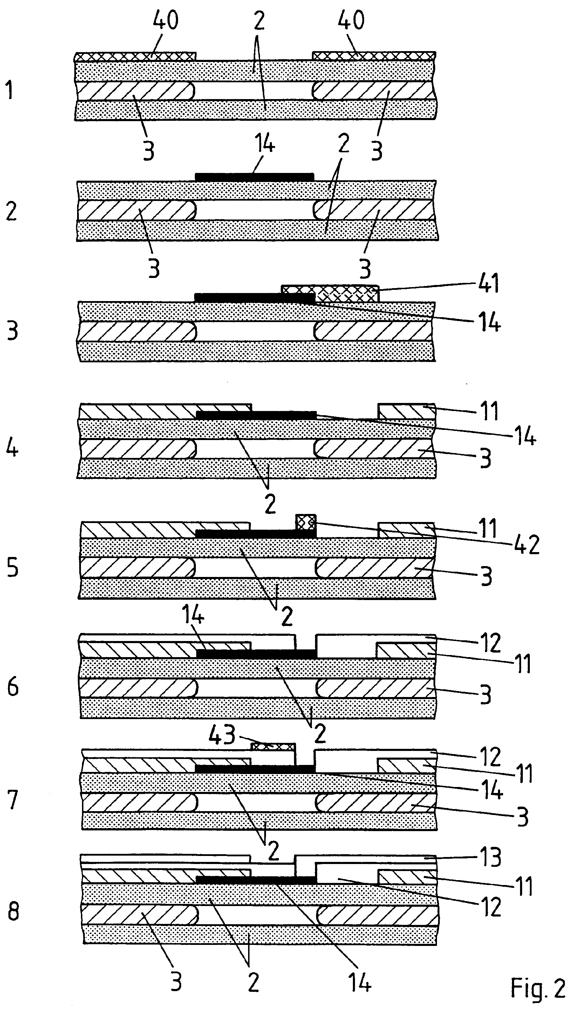

Figur 1 zeigt eine Brennstoffzellenanordnung 1, die einen flächigen, als Platte ausgebildeten Träger umfaßt, auf dem sechs Brennstoffzellen 10 angeordnet sind. Die Platte 2 ist aus einem porösen keramischen Material gefertigt. Die Herstellung der Platte 2 kann mittels Schlickergußverfahren oder Extrusionsverfahren erfolgen. Als keramisches Material eignet sich sehr gut Zirkoniumoxid, das mit Kalziumoxid oder Magnesiumoxid stabilisiert ist. Der Anteil an Kalziumoxid bzw. Magnesiumoxid betragt ca. 15 Mol.% bezogen auf das molare Gesamtgewicht des verwendeten keramischen Materials. Anstelle von stabilisiertem Zirkoniumoxid kann auch Magnesium-Aluminiumspinell (MgAl₂O₃) verwendet werden. Andere temperatur- und korrosionsbeständige keramische Werkstoffe können ebenfalls verwendet werden, sofern ihr theoretischer Ausdehnungskoeffizient bei 1000 °C ebenfalls in der Nähe von 10 bis 11 · 10⁻⁶ Grad⁻¹ liegt, wie es bei den oben genannten Werkstoffen der Fall ist. Die als Träger dienende Platte 2 muß zusätzlich eine definierte Porosität aufweisen, die bei 35 bis 45 % bezogen auf die theoretische Dichte des keramischen Werkstoffs liegen soll. Um dies zu erreichen, werden der Schlicker- bzw. Extrusionsmasse geeignete Porenbildner zugesetzt. Hierfür eignen sich Treibmittel in Form von Polyalkoholen oder Ammoniumbicarbonat. Diese Porenbildner werden beim Sintern der Keramik unter Bildung der Poren thermisch zersetzt. Die gasförmigen Rückstände entweichen beim Sintervorgang verdampft. Das Sintern der Platte erfolgt bei 1300 bis 1600 °C. Die so gebildete Platte 2 ist vollständig gasdurchlässig. Erfindungsgemäß können bestimmte Bereiche der Platte 2, die gasdicht sein sollen, durch eine isolierende Glasur aus Sinterglaskeramik oder durch eine Schicht aus La₁₋ₓ(Sr)ₓCrO₃ oder LaMgₓCr₁₋ₓO₃ abgedichtet werden. Dies gilt insbesondere für die seitlichen Kantenbereiche 2R der Platte. Die Platte 2 weist in ihrem Inneren Hohlräume 3 auf, die in definiertem Abstand voneinander angeordnet sind. Die Hohlräume 3 erstrecken sich zwischen zwei zueinander parallel verlaufenden Seitenkanten 2A und 2B der Platte 2. Die Hohlräume sind in ihren beiden Enden offen. Die Länge der Hohlräume 3 wird durch den Abstand zwischen den beiden Seitenkanten 2A und 2B der Platte bestimmt. Sie beträgt 10 bis 100 cm. Die Breite der Hohlräume 3 beträgt 5 bis 20 mm. Die Hohlräume 3 weisen einen rechteckigen Querschnitt mit einer Fläche von 10 bis 100 mm² auf. Die Dicke der Platte 2 selbst beträgt 5 bis 15 mm. Die Wandstärken der Platten 2 nach außen und zwischen den Hohlräumen 3 betragen 1 bis 5 mm. Die Hohlräume 3 sind so bemessen, daß Kühleinrichtungen (hier nicht dargestellt) in sie integriert werden können. Auf beiden Oberflächen 2S und 2T der Platte 2 sind jeweils drei Brennstoffzellen 10 angeordnet. Jede dieser Brennstoffzellen 10 wird durch eine Kathode 11, einen Festelektrolyten 12 und eine Anode 13 gebildet. Die elektrische Verbindung zwischen den Brennstoffzellen 10, die seriell oder parallel verschaltet werden können, erfolgt durch eine elektrisch leitende Schicht 14. Die Kathode 11 einer jeden Brennstoffzelle 10 wird durch eine elektronenleitende Schicht 14 Kontaktiert, die unmittelbar auf die Oberfläche der Platte 2 aufgetragen ist. Beidseitig eines jeden Hohlraums 3 ist auf der Oberfläche der Platte 2 eine Kathode 11 aufgetragen. Die Breite und Länge einer jeden Kathode 11 ist an die Breite und Länge des jeweiligen Hohlraums 3 angepaßt, der sich im Innenbereich der Platte 2 befindet. Die elektrisch leitenden Schichten 14 sind ebenfalls unmittelbar auf die Oberflächen der Platte 2 aufgetragen. Sie erstrecken sich auf den Oberflächen 2S und 2T der Platte 2 jeweils zwischen den Bereichen zweier Hohlräume 3. Die Kathode 11 einer jeden Brennstoffzelle 10 ist so auf die Oberfläche der Platte 2 aufgetragen, daß sie mit einem Randbereich 11R unmittelbar auf einer elektrisch leitenden Schicht 14 aufliegt. Hierdurch wird eine elektrisch leitende Verbindung zur benachbarten Brennstoffzelle 10 hergestellt. Die elektrisch leitenden Schichten 14 sind aus einem gasdichten Material gefertigt und etwa 50 µm dick. Vorzugsweise wird zur Ausbildung der elektrisch leitenden Schichten 14 La₂₋ₓ(MgSr)ₓCrO₃ oder LaMgₓCr₁₋ₓO₃ verwendet. Die Schichten 14 werden aus einer Suspension durch Siebdruck abgeschieden und anschließend bei einer Temperatur größer/gleich 1300 °C gesintert, oder durch "Elctrochemical Vapor Disposition" aufgebracht. Zur Erhöhung der Leitfähigkeit der Schichten 14 können diese zusätzlich mit einer Schicht aus Ni-ZrO₂-Cermet überzogen werden. Die als Kathode 11 dienenden Schichten sind gasdurchlässig und werden vorzugsweise aus La₁₋ₓSrₓMnO₃ Suspension mittels Siebdruck auf die Oberfläche der Platte 2 und auf den Randbereich 14 A der Schichten 14 aufgetragen und anschließend ebenfalls bei einer Temperatur von größer/gleich 1300°C gesintert. Ein Auftragen der Schichten mittels Pasmaspritzen ist ebenfalls möglich. Die als Kathoden dienenden Schichten 11 sind etwa 0,2 bis 1 mm dick. Auf die Kathode 11 einer jeden Brennstoffzelle 10 ist ein Festelektrolyt in Form einer Schicht 12 aufgetragen. Der Festelektrolyt 12 überdeckt die Kathode 11 vollständig und ist mit einem Randbereich 12A unmittelbar auf die Oberfläche der Platte 2 aufgetragen, und zwar zwischen der elektrisch leitenden Schicht 14, welche die Verbindung zur ersten benachbarten Brennstoffzelle 10 herstellt, und der Kathode 11, die zur gleichen Brennstoffzelle 10 gehört, wie dieser Festelektrolyt 12. Der zweite Randbereich 12B des Festelektrolyten 12 ist auf der elektrisch leitenden Schicht 14 angeordnet, welche die Verbindung zur zweiten benachbarten Brennstoffzelle 10 herstellt. Die Festelektrolyte 12 der Brennstoffzellen 10 sind aus einem gasdichten Werkstoff gefertigt und weisen eine Dicke zwischen 50 und 100 µm auf. Zur Ausbildung des Festelektrolyten 12 wird ZrO₂(_{0,92})(Y₂O₃)_{0,08} verwendet. Die Schichten 12 werden aus einer Suspension oder mittels "Electrochemical Vapor Disposition" (ECVD) abgeschieden. Nach dem Abscheiden aus der Suspension werden sie bei einer Temperatur von größer/gleich 1300°C gesintert. Auf jeden Festelekrolyten 12 einer Brennstoffzelle 10 ist eine Anode 13 aufgetragen, die den Festelektrolyten 12 teilweise überdeckt. Ein Randbereich 13A der Anode 13 ist auf den Randbereich 14B einer elektrisch leitenden Schicht 14 aufgetragen,welche die elektrisch leitende Verbindung zwischen dieser Brennstoffzelle 10 und der zweiten nicht mit der Kathode 11 dieser Brennstoffzelle 10 verbundenen Brennstoffzelle 10 herstellt. Die Schichten 13, welche die Anoden bilden, sind aus Ni-ZrO₂-Cermet gefertigt. Sie sind porös und etwa 50 bis 100 µm dick. Das Auftragen der Schichten 13 erfolgt ebenfalls aus einer Suspension und anschließender Sinterung bei einer Temperatur von größer/gleich 1000 °C in einer reduzierten Atmosphäre. Wie anhand von Figur 2 zu sehen ist, sind jeweils zwei benachbarte Brennstoffzellen 10 über eine elektrisch leitende Schicht 14 miteinander verbunden, wobei einmal die Kathode 11 der einen Brennstoffzelle 10 und einmal die Anode 13 der zweiten Brennstoffzelle 10 mit dieser elektrisch leitenden Schicht 14 in elektrisch leitendem Kontakt steht. Zur elektrisch leitenden Verbindung zwischen zwei benachbarten Brennstoffzellen 10, die auf zwei unterschiedlichen Oberflächen 2S und 2T der Platte 2 angeordnet sind, ist eine elektrisch leitende Schicht 14 über den gesamten Randbereich 2R der Platte 2 aufgetragen. Da die elektrisch leitenden Schichten 14 gasundurchlässig sind, erfüllen sie gleichzeitig die Funktion einer abdichtenden Schicht, die ansonsten auf diese Randbereiche 2R aufzutragen ist, falls die Schichten 14 nur bereichsweise aufgetragen sind.

Beim Betrieb der Brennstoffzellenanordnung 1 wird durch die Hohlräume 3 Luft geleitet. Diese gelangt durch das poröse Material des Trägers 2 zu den Kathoden 11 der Brennstoffzellen 10. Dort werden die Sauerstoffmoleküle in Sauerstoffionen umgesetzt. Diese wandern dann von der Kathode 11 durch den Festelektrolyten 12 zur Anode 13. An den Außenflächen der Anoden 13 wird der gasförmige bzw. vergaste Brennstoff vorbeigeleitet. An der Grenzfläche zwischen jedem Festelektrolyten 12 und jeder Anode 13 kommt es zu einer Verbindung zwischen den Sauerstoffionen und dem der Anode zugeführten Brennstoff, wobei Elektronen freigesetzt und ein Reaktionsprodukt gebildet wird. Wird als Brennstoff Wasserstoff verwendet, so entsteht als Reaktionsprodukt Wasser. Die bei der Reaktion freiwerdenden Elektronen laden die Anode 13 negativ auf und fließen über einen elektrischen Verbraucher zur positiv geladenen Kathode.

Die Herstellung der Schichten 11,12 und 13, welche die Kathode, den Festelektrolyten und die Anode einer jeden Brennstoffzelle 10 bilden, wird anhand von Figur 2 in acht Verfahrensschritten erläutert. Figur 2 zeigt einen Teilbereich der als Träger dienenden Platte 2. Die Herstellung der Brennstoffzellen wird nur an einer einseitigen Beschichtung der Platte 2 erläutert. Zunächst wird auf die Oberfläche der Platte 2 im Bereich der Hohlräume 3 jeweils eine Maske 40 aufgetragen, deren Breite und Länge an die Breite und Länge der Hohlräume 3 angepaßt ist. Zur Ausbildung der Masken werden filmbildende organische oder anorganische Substanzen verwendet, die sich wieder von der Oberfläche der Platte 3 lösen lassen. Die Masken 40 werden so angeordnet, daß auf der Oberfläche der Platte 2 zwischen den Bereichen der Hohlräume 3 jeweils ein Streifen von 5 bis 8 mm frei bleibt. Dieser nicht maskierte Streifen wird dann mit dem Werkstoff beschichtet, der die elektrisch leitende Schicht 14 bildet. Anschließend werden die Masken 40 wieder entfernt. Es folgt das Aufbringen einer weiteren Maske 41, welche die Hälfte der Schicht 14 überdeckt und zusätzlich über eine Breite von 1 bis 3 mm unmittelbar auf die Oberfläche der Platte 2 aufgetragen ist. Anschließend werden im Bereich der Hohräume 3 die Schichten 11 aufgetragen, welche die Kathoden bilden. Mit dem Kathodenmaterial werden alle Flächen bis auf den mit der Maske 41 abgedeckten Bereich beschichtet. Die Beschichtung mit dem Kathodenmaterial erfolgt derart, daß Kathoden 11 mit den oben beschriebenen Abmessungen ausgebildet werden. Anschließend werden die Masken 41 entfernt. Auf der Oberfläche der Platte 2 sind nunmehr eine elektrisch leitende Schicht 14 und zwei Kathoden 11 aufgetragen. Es werden nunmehr weitere Masken 42 aufgetragen, und zwar auf der Oberfläche der elektrisch leitenden Schichten 14. Mit den Masken 42 wird etwa die Hälfte der noch frei bleibenden Oberfläche der jeweiligen elektrisch leitenden Schicht 14 abgedeckt. Anschließend werden Schichten 12 aufgetragen, welche die Festelektrolyten der Brennstoffzellen 10 bilden. Nach dem Entfernen der Masken 42 zeigt die Oberfläche des Trägers 2 eine Struktur mit einer elektrisch leitenden Schicht 14, zwei Kathoden 11 und zwei Festelektrolyten 12. Zur Ausbildung der Anoden 13 wird eine weitere Maske 43 ausgebildet. Diese wird auf dem Randbereich 12B des Festelektrolyten 12 angeordnet, der auf der elektrisch leitenden Schicht 14 angeordnet ist. Anschließend werden alle freibleibenden Flächen mit anodischem Material zur Ausbildung der Anoden 13 beschichtet, derart, daß jede Brennstoffzelle 10 mit einer die oben beschriebenen Abmessungen aufweisenden Anode 13 versehen ist. Anschließend wird die Maske 43 entfernt. Damit ist die Ausbildung der Brennstoffzellen 10 abgeschlossen. Da die elektrisch leitenden Schichten 14, welche die Brennstoffzellen 10 elektrisch leitend verbinden, ebenfalls schon vorhanden sind, ist eine serielle oder parallele Verschaltung der Brennstoffzellen, je nach Bedarf, auf einfache Weise möglich.

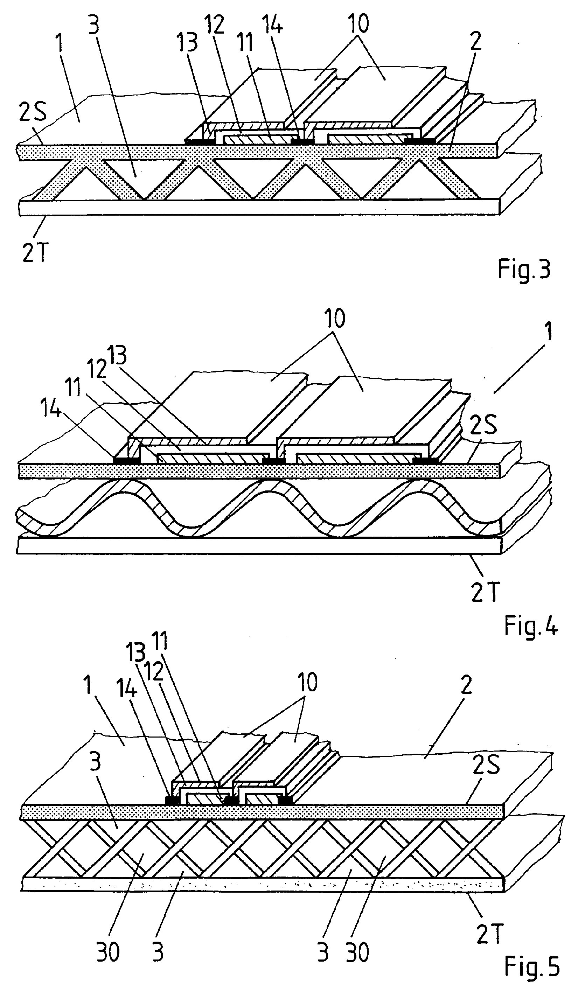

Die Figuren 3,4 und 5 zeigen mögliche Ausführungsformen von Brennstoffzellenanordnungen 1. Insbesondere werden hier Möglichkeiten aufgezeigt, wie die Hohlräume 3 innerhalb der Platte 2 ausgebildet und gegeneinander abgegrenzt werden können. Bei allen Ausführungsformen wird eine Begrenzungsfläche eines jeden Hohlraums 3 durch die Plattenoberfläche 2S, 2T mitgebildet. In den Bereichen der Hohlräume können auf den Oberflächen 2S, 2T Brennstoffzellen 10 in der oben beschriebenen Art und Weise ausgebildet werden. Auch hierbei ist es möglich zwei benachbarte Brennstoffzellen 10 über eine elektrisch leitende Schicht 14 zu verbinden. Bei der in Figur 5 dargestellten Ausführungsform der Platte 2 besteht die Möglichkeit, durch die Hohlräume 30 kalte Luft für die Kühlung zu leiten.

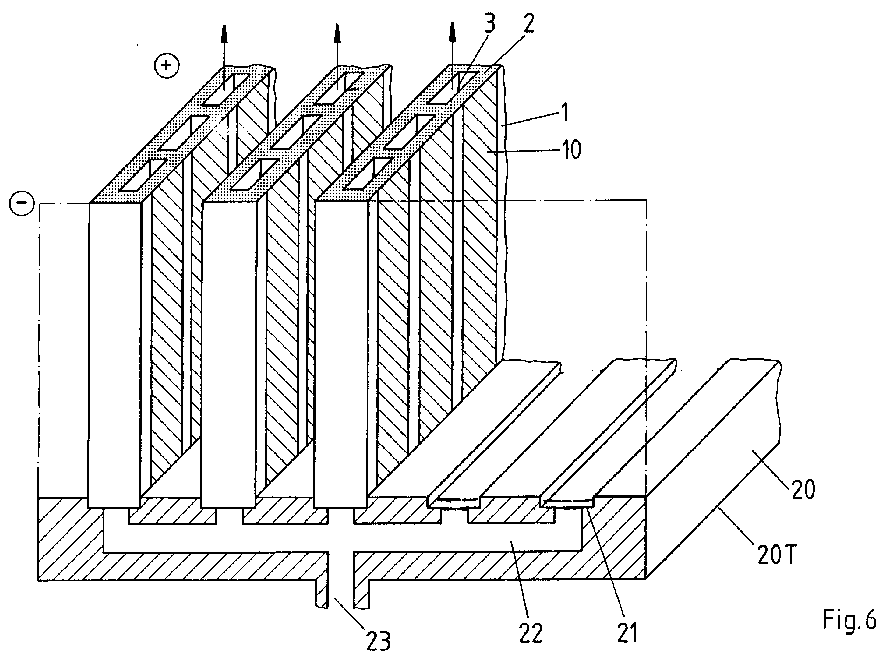

Figur 6 zeigt einen Modul 20, der zur Aufnahme mehrerer Brennstoffzellenanordnungen 1 geeignet ist. Hierfür ist eine Haltevorrichtung 20 T des Moduls 20 mit Vertiefungen 21 versehen, deren Abmessungen an die Abmessungen der seitlichen Randbereiche 2A bzw. 2B der Platten 2 angepaßt sind. Hierdurch ist es möglich, in jede Vertiefung 21 eine Platte 2 so einzusetzen, daß die Oberfläche der Platte 2 senkrecht zur Oberfläche der Haltevorrichtung 20 T angeordnet ist. Die Haltevorrichtung 20 T ist als quaderförmiger Körper ausgebildet, der in seinem Inneren eine Verteilerkammer 22 aufweist. Jede Vertiefung 21 steht mit mindestens einer, vorzugsweise mehreren Öffnungen (hier nicht dargestellt), mit der Verteilerkammer 22 in Verbindung. Die Verteilerkammer 22 ist mit einer Zuleitung 23 versehen, über welche Luft in die Verteilerkammer 22 eingeleitet werden kann. Da die Platten 2 so in die Vertiefungen 21 eingesetzt sind, daß die Hohlräume 3 mit ihren Öffnungen der Verteilerkammer 22 zugewandt sind, kann die in die Verteilerkammer 22 eingeleitete Luft in die Hohlräume 3 der Platten 2 einströmen. Die Luft, welche nicht durch das poröse Material der Platten zu den Kathoden der Brennstoffzellen 10 strömt, kann am zweiten offenen Ende der Hohlräume 3 aus den Platten 2 ausströmen. Die auf der Haltevorrichtung 20 angeordneten Brennstoffzellen 10 können parallel oder seriell miteinander verschaltet werden.

Erfindungsgemäß besteht die Möglichkeit, die Brennstoffzellenanordnung 1 auch so auszubilden, daß die Anordnung der Anoden 13 und der Kathoden 11 vertauschbar ist, d.h. die Kathoden 11, die außenliegenden Elektroden bilden und die Anoden 13 direkt auf die Platte 2 aufgetragen sind. In diesem Fall wird der gasförmige bzw. vergaste Brennstoff durch die Hohlräume 3 geleitet und die Luft außen vorbeigeführt.

## Patentansprüche

1. Brennstoffzellenanordnung mit einem als poröse Platte ausgebildeten Träger, auf dem wenigstens eine Brennstoffzelle (10) angeordnet ist, die eine Anode (13), eine Kathode (11) und einen ionenleitenden Festelektrolyten (12) aufweist, wobei für die elektrische Verschaltung jeweils zweier benachbarter Brennstoffzellen (10) eine elektrisch leitende Schicht (14) vorgesehen ist, **dadurch gekennzeichnet**, daß der Träger (2) im Inneren wenigstens einen, vorzugsweise mehrere nach außen geöffnete Hohlräume (3) aufweist, die sich zwischen zwei parallel zueinander verlaufenden Seitenkanten der Platte (2) erstrecken und in definiertem Abstand voneinander angeordnet und gegeneinander abgegrenzt sind, daß die Brennstoffzellen (10) im Bereich der Hohlräume (3) angeordnet sind, und die Kathode (11) einer Brennstoffzelle (10) unmittelbar auf die Oberfläche (2A, 2I) der Platte (2) aufgetragen und ihre Abmessungen auf die Länge und Breite der Hohlräume (3) abgestimmt ist, daß jeweils ein Randbereich (11R) einer jeder Kathode (11) auf dem Randbereich (14A) der ebenfalls auf der Platte aufgetragenen elektrisch leitenden Schicht (14), welche die Brennstoffzelle (10) mit einer zweiten benachbarten Brennstoffzelle (10) verbindet, angeordnet ist, daß der Festelektrolyt (12) einer jeden Brennstoffzelle (10) die zugehörige Kathode (11) vollständig überdeckt und mit einem ersten Randbereich (12A) unmittelbar auf die Platte (2) und mit dem zweiten Randbereich (12B) auf der elektrisch leitenden Schicht (14), welche die Brennstoffzelle (10) mit einer zweiten benachbarten Brennstoffzelle (10) verbindet, aufgetragen ist, und daß die Anode (13) einer jeder Brennstoffzelle (10) auf die Oberfläche des zugehörigen Festelektrolyten (12) aufgetragen, und ein Randbereich (13A) einer jeden Anode (13) auf die elektrisch leitende Schicht (14) aufgetragen ist, welche die Brennstoffzelle (10) mit einer zweiten benachbarten Brennstoffzelle (10) verbindet.

2. Brennstoffzellenanordnung nach Anspruch 1, dadurch gekennzeichnet, daß in den Begrenzungswänden der Hohlräume (3), die sich im Inneren der Platte (2) erstrecken, Kühleinrichtungen angeordnet sind.

3. Brennstoffzellenanordnung nach einem der Ansprüche 1 oder 2, dadurch gekennzeichnet, die Begrenzungswände der Hohlräume (3) in der Platte (2) als Plattenkühler ausgebildet sind.

4. Brennstoffzellenanordnung nach einem der Ansprüche 1 bis 3, dadurch gekennzeichnet, daß die Platte (2) eine Dicke von 5 bis 10 mm aufweist, daß die Begrenzungsflächen der Platte (2) 1 bis 2 mm dick sind, und daß jede Platte (2) eine Oberfläche von 100 bis 10.000 cm² aufweist.

5. Brennstoffzellenanordnung nach einem der Ansprüche 1 bis 4, dadurch gekennzeichnet, daß die Hohlräume (3) eine Länge von 10 bis 100 cm und eine Breite von 5 bis 20 cm aufweisen.

6. Brennstoffzellenanordnung nach Anspruch 1, dadurch gekennzeichnet, daß eine quaderförmige Haltevorrichtung (20T) zur Bildung eines Moduls (20) vorgesehen ist, die mit Vertiefungen (21) ausgebildet ist, in die Brennstoffzellenanordnungen (1) einsetzbar sind, daß die Haltevorrichtung (20T) im Innenbereich eine Verteilerkammer (23) aufweist, in die über eine Zuleitung (23) Luft einleitbar ist, daß die Vertiefungen (21) über eine oder mehrere Öffnungen mit der Verteilerkanmer (22) in Verbindung stehen, und daß die in der Verteilerkammer (22) enthaltene Luft in die Hohlräume (3) der Platte (2) einleitbar ist.

## Claims

1. Fuel cell system having a carrier which is constructed as a porous plate and on which at least one fuel cell (10) is disposed, which exhibits an anode (13), 5 a cathode (11) and an ion-conductive solid electrolyte (12), in which an electrically conductive layer (14) is provided for the electrical connection in each instance of two adjacent fuel cells (10), characterized in that the carrier (2) exhibits in the interior at least one, 10 preferably a plurality of outwardly open cavities (3), which extend between two lateral edges of the plate (2) extending parallel to one another and are disposed at a defined spacing from one another and are delimited in relation to one another, in that the fuel cells (10) are 5 disposed in the region of the cavities (3), and the cathode (11) of a fuel cell (10) is directly applied to the surface (2A, 2I) of the plate (2), and its dimensions are coordinated with the length and width of the cavities (3), in that in each instance a marginal region (11R) of each respective cathode (11) is disposed on the marginal region (14A) of the electrically conductive layer (14) which is applied likewise to the plate and which connects the fuel cell (10) to a second adjacent fuel cell (10), in that the solid electrolyte (12) of each respective fuel cell (10) entirely covers the associated cathode (11) and is applied by a first marginal region (12A) directly onto the plate (2) and by the second marginal region (12B) on the electrically conductive layer (14) which connects the fuel cell (10) to second adjacent fuel cell (10), and in that the anode (13) of each respective fuel cell (10) is applied to the surface of the associated solid electrolyte (12), the a marginal region (13A) of each respective anode (13) is applied to the electrically conductive layer (14), which connects the fuel cell (10) to a second adjacent fuel cell (10).

2. Fuel cell system according to Claim 1, characterized in that cooling devices are disposed in the boundary walls of the cavities (3) which extend in the interior of the plate (2).

3. Fuel cell system according to one of Claims 1 or [sic] 2, characterized in that the boundary walls of the cavities (3) in the plate (2) are constructed as plate-type coolers.

4. Fuel cell system according to one of Claims 1 to 3, characterized in that the plate (2) exhibits a thickness of 5 to 10 mm, in that the boundary surfaces of the plate (2) are 1 to 2 mm thick, and in that each plate (2) exhibits a surface area of 100 to 10,000 cm².

5. Fuel cell system according to one of Claims 1 to 4, characterized in that the cavities (3) exhibit a length of 10 to 100 cm and a width of 5 to 20 cm.

6. Fuel cell system according to Claim 1, characterized in that a parallelepipedic retaining device (20T) is provided for the formation of a module (20), which retaining device is equipped with depressions (21), into which fuel cell systems (1) can be inserted, in that the retaining device (20T) exhibits, in the internal region, a distributor chamber (23) into which air can be introduced via a supply line (23), in that the depressions (21) are connected via one or more openings to the distributor chamber (22), and in that the air contained in the distributor chamber (22) can be introduced into the cavities (3) of the plate (2).

## Revendications

1. Système de cellule de pile à combustible comportant un support qui se présente sous la forme d'une plaque poreuse et sur lequel est disposée au moins une cellule (10) de pile à combustible qui comprend une anode (13), une cathode (11) et un électrolyte solide (12) conducteur d'ions, une couche (14) électro-conductrice étant prévue pour la connexion électrique de deux cellules (10) de pile à combustible voisines, caractérisé par le fait que le support (2) comporte au moins une, de préférence plusieurs cavités (3) intérieures ouvertes en direction de l'extérieur qui s'étendent entre deux bords latéraux mutuellement parallèles de la plaque (2), à distance déterminée les unes des autres, et sont séparées les unes des autres, par le fait que les cellules (10) de pile à combustible sont disposées dans la région des cavités (3), que la cathode (11) d'une cellule (10) est appliquée directement sur la surface (2A, 2I) de la plaque (2) et que ses dimensions sont adaptées en fonction de la longueur et de la largeur des cavités (3), par le fait qu'une zone de bord (11R) de chaque cathode (11) est aménagée sur la zone de bord (14A) de la couche électro-conductrice (14) appliquée sur la plaque qui connecte la cellule (10) de pile à combustible à une deuxième cellule (10) voisine, par le fait que l'électrolyte solide (12) de chaque cellule (10) de pile à combustible recouvre en totalité la cathode (11) correspondante et est appliqué, par une première zone de bord (12A) directement sur la plaque (2) et par une deuxième zone de bord (12B) sur la couche électro-conductrice (14) qui relie la cellule (10) de pile à combustible à une deuxième cellule (10) voisine et par le fait que l'anode (13) de chaque cellule (10) de pile à combustible est appliquée sur la surface de l'électrolyte solide (12) associé et qu'une zone de bord (13A) de chaque anode (13) est appliquée sur la couche électro-conductrice (14) qui relie la cellule (10) de pile à combustible à une deuxième cellule (10) voisine.

2. Système de cellule de pile à combustible selon la revendication 1, caractérisé par le fait que des dispositifs de refroidissement sont disposés à l'intérieur des cloisons qui délimitent les cavités (3) à l'intérieur de la plaque (2).

3. Système de cellule de pile à combustible selon l'une des revendications 1 ou 2, caractérisé par le fait que les cloisons qui délimitent les cavités (3) à l'intérieur de la plaque (2) sont agencées sous forme de refroidisseur à plaques.

4. Système de cellule de pile à combustible selon l'une des revendications 1 à 2, caractérisé par le fait que la plaque (2) a une épaisseur comprise entre 5 et 10 mm, que les surfaces de délimitation de la plaque (2) ont une épaisseur comprise entre 1 et 2 mm et par le fait que chaque plaque (2) a une surface comprise entre 100 et 10 000 cm².

5. Système de cellule de pile à combustible selon l'une des revendications 1 à 4, caractérisé par le fait que les cavités (3) ont une longueur comprise entre 10 et 100 cm et une largeur comprise entre 5 et 20 cm.

6. Système de cellule de pile à combustible selon la revendication 1, caractérisé par le fait qu'il est prévu un dispositif de support (20T) parallélépipédique pour former un module (20), lequel dispositif de support est pourvu d'alvéoles (21) dans lesquels sont placés des systèmes de cellules de pile à combustible (1), par le fait que le dispositif de support (20T) comporte une chambre de répartition (22) intérieure dans laquelle de l'air peut être introduit par l'intermédiaire d'une conduite d'entrée (23), que les alvéoles (21) communiquent par une ou plusieurs ouvertures avec la chambre de répartition (22) et par le fait que l'air contenu dans la chambre de répartition (22) peut être envoyé dans les cavités (3) de la plaque (2).
